# FASCICULE DE BREVET EUROPEEN

(11) **EP 4 292 380 B1**
(45) Date de publication et mention de la délivrance du brevet: **04.12.2024**
(21) Numéro de dépôt: 22708586.7
(22) Date de dépôt: 04.02.2022
(51) Int. Cl.: H04W 76/10, H04W 76/00

(54) **TRANSMISSION DE DONNÉES D'UN RÉSEAU DE COMMUNICATION VERS UN ÉQUIPEMENT UTILISATEUR**
ÜBERTRAGUNG VON DATEN VON EINEM KOMMUNIKATIONSNETZ ZU EINEM TEILNEHMERGERÄT
TRANSMISSION OF DATA FROM A COMMUNICATION NETWORK TO AN ITEM OF USER EQUIPMENT

(30) Priorité: 12.02.2021 FR 2101333
(43) Date de publication de la demande: 20.12.2023
(73) Titulaire: Orange, 92130 Issy-les-Moulineaux (FR)
(72) Inventeur: MOUQUET, Antoine, 92326 CHÂTILLON CEDEX (FR)
(86) Numéro de dépôt international: PCT/FR2022/050218
(87) Numéro de publication internationale: WO 2022/171952

(56) Documents cités:
- INTERDIGITAL INC: "Update Solution 3: Fix up, Impacts and Evaluation", vol. SA WG2, no. Sophia Antipolis, France; 20180820 - 20180824, 14 August 2018 (2018-08-14), XP051536964, Retrieved from the Internet <URL:http://www.3gpp.org/ftp/tsg%5Fsa/WG2%5FArch/TSGS2%5F128BIS%5FSophia%5FAntipolis/Docs/S2%2D188015%2Ezip> [retrieved on 20180814]
- SAMSUNG: "Evaluation and Conclusion of KI1", vol. SA WG2, no. Dongguan, China; 20181015 - 20181019, 8 October 2018 (2018-10-08), XP051539292, Retrieved from the Internet <URL:http://www.3gpp.org/ftp/tsg%5Fsa/WG2%5FArch/TSGS2%5F129%5FDongguan/Docs/S2%2D1810306%2Ezip> [retrieved on 20181008]

## Description

La présente invention concerne la transmission de données d'un réseau de communication vers un équipement utilisateur, et plus particulièrement la transmission vers un terminal mobile de données d'authentification.

Dans les réseaux mobiles actuels, que ce soit les réseaux dits « 4G » ou « 5G », plusieurs modes de transmission de données sont possibles entre le terminal de l'utilisateur et le coeur de réseau. On distingue en particulier un mode de transmission classique dans le plan utilisateur, plus adapté aux données à fort volume mais plus lourd à mettre en oeuvre, où le terminal échange des données avec une entité réseau faisant la passerelle entre le réseau mobile et les réseaux tiers tels qu'internet (passerelle P-GW en 4G, noeud UPF en 5G) et un mode de transmission dans le plan de contrôle, plus adapté aux données de faibles volumes et moins lourd à mettre en oeuvre, où le terminal échange des données avec une autre entité réseau au moyen de messages de signalisation (entité MME en 4G, noeud AMF en 5G).

Ainsi, lorsque certaines données sont à transmettre du réseau vers le terminal mobile, il est envisageable d'utiliser l'un ou l'autre de ces deux modes de réalisation.

Afin que le réseau puisse gérer la sélection entre ces deux modes de transmission de données descendantes, il a déjà été proposé dans le brevet EP 3216239 B1 que le réseau mesure le volume des données descendantes destinées à un terminal mobile, le mode de transmission dans le plan de contrôle étant privilégié par le réseau lorsque ces données présentent un faible volume, et inversement. Ce mécanisme repose sur une discrimination basée sur le volume des données, et induit ainsi que les données descendantes à faible volume sont systématiquement transmises dans le plan de contrôle, ce qui n'est pas toujours une solution optimale en matière de gestion des ressources réseau, notamment lorsque le terminal mobile est déjà connecté plan utilisateur du réseau mobile.

Il a aussi été proposé que le terminal mobile indique au réseau sa propre préférence entre ces deux modes de transmission, afin que celle-ci soit prise en compte par le réseau pour décider du mode de transmission pour les données descendantes à transmettre au terminal mobile. Cette autre proposition nécessite alors une adaptation au niveau des terminaux mobiles, ce qui peut s'avérer délicat à mettre en oeuvre.

Pour sa part, une contribution 3GPP « Update Solution 3 : Fix up, Impacts and Evaluation » (3GPP Draft ; S2-188015, XP051536964, 14 août 2018) évoque de manière très générale, parmi différentes solutions possibles au problème de la transmission peu fréquente de données à faible volume, une solution qui serait basée sur le principe d'une transmission de données dans le plan de contrôle sans établissement préalable d'une session PDU, pour toutefois souligner les problèmes qu'elle induit et lui préférer au final une autre solution « Data over CP via SMF » reposant sur une session PDU.

Par ailleurs, la mise en place de réseaux privés (dits NPN, Non-Public Networks), par exemple réservés à l'usage d'une entreprise sur un site industriel, constitue un des cas d'usages majeurs de la technologie 5G. Dans ce contexte, une entreprise utilisatrice d'un NPN veut connecter à son NPN un appareil qu'elle a acheté "sur étagère", c'est-à-dire que cet appareil n'a pas été pré-configuré lors de sa fabrication avec les informations d'authentification (dites « credentials ») nécessaires à son enregistrement sur le NPN.

Le document 3GPP TR 23.700-07 « Study on enhanced support of Non-Public Networks (NPN) », version 1.2.0 (novembre 2020), prévoit pour répondre à ce besoin qu'un équipement utilisateur émette à destination d'un NPN une requête d'enregistrement contenant une indication « registration request is for onboarding », qu'il soit enregistré dans le NPN et qu'il utilise ensuite la connectivité offerte par ce NPN pour recevoir d'une serveur de provisionnement (dit PS) les informations d'authentification qu'il devra utiliser pour s'enregistrer par la suite avec ce même NPN.

Le document TR 23.700-07 envisage par ailleurs deux modes de réception de ces informations d'authentification, en l'occurrence un premier mode de transmission dans le plan utilisateur, à l'initiative de l'équipement utilisateur, où l'équipement utilisateur demande l'établissement d'une session PDU puis utilise la connectivité IP offerte par cette session PDU pour établir une connexion au PS et un deuxième mode de transmission dans le plan de contrôle, à l'initiative du réseau, ce qui nécessite alors que le réseau ait la connaissance du mode à utiliser afin de déclencher ou non le mode de transmission dans le plan de contrôle, étant donné que certains terminaux peuvent ne supporter qu'un seul de ces deux modes.

La présente invention vise à remédier aux inconvénients des implémentations proposées ci-dessus, en proposant un procédé de sélection d'un mode de transmission qui ne présente pas les inconvénients de ces implémentations.

Il est proposé à cet effet un procédé de transmission de données d'un réseau de communication vers un équipement utilisateur, comprenant les étapes suivantes :
détecter la réception d'une requête pour obtenir des données, émise par ledit équipement utilisateur ;
surveiller si une session avec ledit équipement utilisateur au travers du réseau de communication est établie suite à la détection de la réception de ladite requête ; et
si aucun établissement d'une session avec ledit équipement utilisateur n'est détecté avant l'expiration d'un délai après la détection de la réception de ladite requête, transmettre vers l'équipement utilisateur au moins un message de signalisation contenant lesdites données.

Ce procédé peut comprendre en outre, lorsque l'établissement d'une session avec l'équipement utilisateur est détecté avant l'expiration dudit délai, la transmission vers l'équipement utilisateur, au moyen de ladite session, desdites données.

Selon un mode de réalisation dans lequel lesdites données sont des données utilisables par l'équipement utilisateur, disponibles auprès d'un équipement réseau mettant en oeuvre ladite surveillance de l'établissement d'une session avec l'équipement utilisateur, distinct d'une première entité réseau recevant ladite requête émise par l'équipement utilisateur, la détection de la réception de ladite requête comprend en outre la transmission, de la première entité réseau à l'équipement réseau, d'un message de notification de la réception de ladite requête par la première entité réseau, ladite surveillance étant déclenchée par la réception du message de notification par l'équipement réseau.

Dans un mode de réalisation particulier, cette session est une session applicative établie entre l'équipement réseau et l'équipement utilisateur.

Dans un autre mode de réalisation particulier, cette session est une session d'échange de données établie au moyen d'une entité de gestion de session, ladite surveillance de l'établissement d'une session comprend la surveillance, par l'équipement réseau, de la réception d'un message de notification de l'établissement d'une session d'échange de données dont l'émission est déclenchée par ladite entité de gestion de session suite à l'établissement d'une session d'échange de données au moyen de l'entité de gestion de session.

Selon un autre mode de réalisation dans lequel lesdites données sont disponibles via un équipement réseau distinct d'une deuxième entité réseau mettant en oeuvre ladite surveillance de l'établissement d'une session avec l'équipement utilisateur, ladite transmission vers l'équipement utilisateur des messages de signalisation contenant lesdites données comprend la transmission, de la deuxième entité réseau à l'équipement réseau, d'une requête instruisant à l'équipement réseau de transmettre lesdites données à une troisième entité réseau et la transmission, de ladite troisième entité réseau vers l'équipement utilisateur, d'au moins un message de signalisation contenant lesdites données.

Dans un mode de réalisation particulier dans lequel la deuxième entité réseau reçoit ladite requête, la réception de ladite requête déclenche la surveillance de l'établissement d'une session avec l'équipement utilisateur.

Selon un mode de réalisation dans lequel ladite session est une session établie au moyen d'une entité de gestion de session, ladite surveillance de l'établissement d'une session comprend la surveillance, par la deuxième entité réseau, de la réception d'un message de notification dont l'émission est déclenchée par ladite entité de gestion de session suite à l'établissement d'une session établie au moyen de l'entité de gestion de session.

Selon un autre mode de réalisation dans lequel ladite session est une session d'échange de données établie au moyen d'une entité de gestion de session, ladite surveillance de l'établissement d'une session comprend la surveillance, par la deuxième entité réseau, de la transmission entre l'entité de gestion de session et l'équipement utilisateur d'un message de confirmation de l'établissement d'une session d'échange de données avec l'équipement utilisateur.

Dans un mode de réalisation particulier dans lequel ladite session est une session applicative établie entre l'équipement réseau et l'équipement utilisateur, l'équipement réseau transmet à la deuxième entité réseau un message de notification d'établissement d'une session d'échange de données suite à l'établissement de ladite session applicative.

Dans un mode de réalisation particulier, ledit équipement réseau ci-avant est un serveur de provisionnement de données d'authentification et lesdites données sont des données d'authentification.

Il est également proposé une entité réseau apte à être utilisée dans un réseau de communication, ladite entité réseau étant configurée pour surveiller si une session avec un équipement utilisateur au travers du réseau de communication est établie suite à la détection de la réception d'une requête pour obtenir des données, émise par ledit équipement utilisateur, et si aucun établissement d'une session avec ledit équipement utilisateur n'est détecté avant l'expiration d'un délai après ladite détection de la réception de ladite requête, déclencher la transmission vers l'équipement utilisateur d'au moins un message de signalisation contenant lesdites données.

Il est également proposé un système comprenant l'entité réseau ci-avant ainsi qu'une autre entité réseau apte à être utilisée dans un réseau de communication, cette autre entité réseau étant configurée pour détecter la réception d'une requête pour obtenir des données, émise par ledit équipement utilisateur, et, suite à la détection de la réception de ladite requête, déclencher la surveillance pendant une durée déterminée de l'établissement d'une session avec ledit équipement utilisateur au travers du réseau de communication.

Il est également proposé un équipement utilisateur apte à être utilisé avec un réseau de communication, ledit équipement utilisateur étant configuré pour transmettre, vers une entité réseau du réseau de communication, une requête pour obtenir des données et recevoir en retour, d'une entité réseau du réseau de communication, au moins un message de signalisation contenant lesdites données, transmis suite à l'expiration d'une délai après la réception de ladite requête sans qu'une session au travers du réseau ne soit établie avec ledit équipement utilisateur.

Cet équipement utilisateur peut avantageusement comprendre en outre un module de temporisation, configuré pour être déclenché par la transmission de la requête pour obtenir des données et bloquant l'émission d'une requête d'établissement de session vers le réseau jusqu'à l'expiration d'une durée déterminée après le déclenchement du module de temporisation.

Cet équipement utilisateur peut avantageusement être configuré en outre pour insérer un identifiant dudit équipement utilisateur dans une requête de connexion destinée à un équipement réseau auprès duquel sont disponibles lesdites données et transmettre ladite requête de connexion vers ledit équipement réseau, afin de déclencher la récupération desdites données par l'équipement réseau au moyen dudit identifiant et la réception desdites données via une connexion avec l'équipement réseau.

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
La figure 1 représente les étapes d'un procédé selon le principe général de la présente invention ;
La figure 2 illustre une architecture réseau dans laquelle peut être mis en oeuvre un premier mode de réalisation de la présente invention ;
La figure 3 représente les étapes d'un procédé selon un premier mode de réalisation de la présente invention ;
La figure 4 représente les étapes d'un procédé selon un deuxième mode de réalisation de la présente invention ;
La figure 5 représente les étapes d'un procédé selon un troisième mode de réalisation de la présente invention ;
La figure 6 représente les étapes d'un procédé selon un quatrième mode de réalisation de la présente invention ;
La figure 7 illustre une entité réseau mettant en oeuvre la détection de la réception d'une requête selon un mode de réalisation de l'invention ;
La figure 8 illustre une entité réseau mettant en œuvre la surveillance de l'établissement d'une session avec l'équipement utilisateur selon un mode de réalisation de l'invention ; et
La figure 9 illustre un équipement utilisateur selon un mode de réalisation de l'invention.

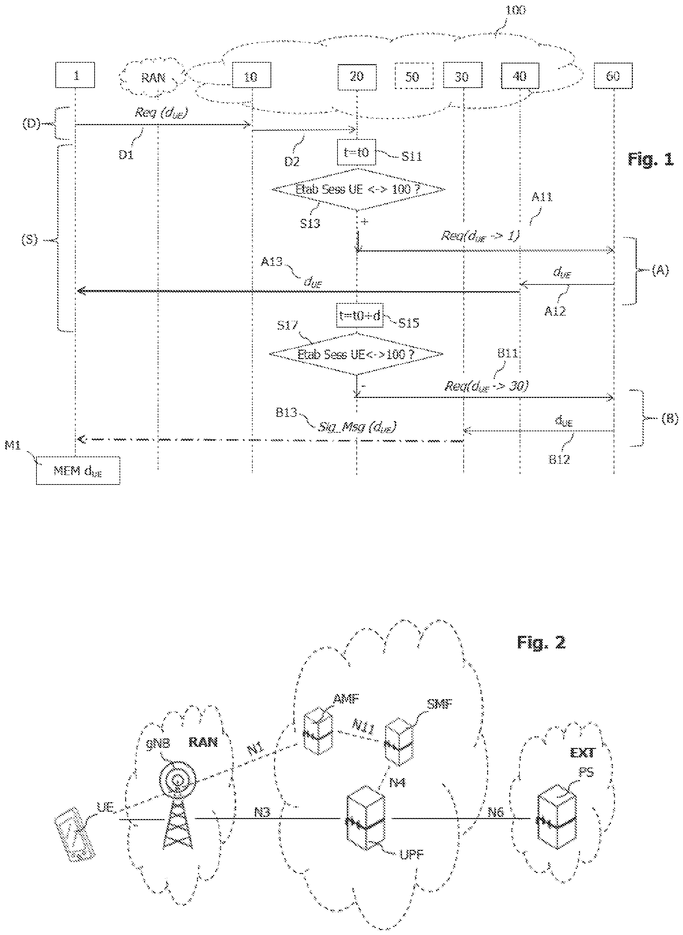

Il est fait tout d'abord référence à la **Figure 1****,** sur laquelle sont illustrées les étapes du procédé selon le principe général de la présente invention.

Ce procédé est employé dans le cadre de la transmission de données, au travers d'un réseau de communication 100, depuis un équipement réseau 60 vers un équipement utilisateur 1 (par exemple un smartphone, une tablette, un téléphone portable, un PC portable, objet communiquant, etc.).

Cet équipement réseau 60 est typiquement un équipement réseau tiers, situé dans un réseau externe au réseau de communication 100 et connecté à celui-ci par l'intermédiaire d'un rioeud réseau 40 agissant comme passerelle d'accès aux réseaux externes, mais peut aussi être un équipement réseau appartenant à la partie cœur de ce réseau, quand il s'agit d'un réseau mobile de communication. Il peut s'agir en particulier d'un serveur, que l'on peut désigner par serveur de provisionnement (« provisioning server » en anglais), stockant certaines données à fournir aux équipements utilisateurs, et plus particulièrement d'un serveur de provisionnement de données d'authentification.

Les données considérées ici peuvent être plus particulièrement des données utilisables par l'équipement utilisateur UE (en ce sens qu'une fois reçues par cet équipement utilisateur, elles peuvent y être stockées pour un usage ultérieur par cet équipement utilisateur) et disponibles dans cet équipement réseau 60, soit parce qu'elles y sont stockées, soit par ce que cet équipement réseau 60 les génère à l'avance ou à la volée, soit parce que cet équipement réseau 60 peut les recevoir d'un autre équipement réseau. Il peut s'agir en particulier de données d'authentification, permettant à l'équipement utilisateur de s'authentifier pour pouvoir accéder à un réseau, qu'on appelle « credentials » en anglais, lesquelles peuvent être générées et/ou stockées par un serveur de provisionnement de données d'authentification.

Ce procédé comprend tout d'abord la détection (phase D sur la figure 1) de la réception (étape D1) d'une requête (Req (d_{UE}) sur la figure 1), émise par l'équipement utilisateur 1, pour obtenir des données (d_{UE} sur la figure 1).

Cette détection peut être mise en oeuvre par une entité réseau 10 (pouvant être également qualifiée de noeud réseau) du réseau de communication 100. Cette entité réseau 10, chargée ici de détecter la réception de la requête pour obtenir des données d_{UE} émise par l'équipement 1, peut être une entité du réseau 100 distincte de l'équipement réseau 60 susmentionné ou confondue avec celui-ci, selon les modes de réalisation. Cette détection D peut être directe, lorsque cette entité réseau 10 reçoit elle-même cette requête, ou indirecte, lorsqu'une autre entité réseau reçoit cette requête et en notifie l'entité réseau 10.

Comme il sera illustré plus loin, cette requête peut en particulier être une requête d'enregistrement auprès du réseau (« REGISTER REQUEST ») telle que définie dans la spécification 3GPP TS 23.502 (v16.7.1) relative à la norme 5G, dans laquelle est insérée une indication que l'équipement UE désire obtenir ces données.

On surveille ensuite (phase S sur la figure 1) si une session avec ledit équipement utilisateur au travers du réseau de communication est établie suite à la détection de la réception de ladite requête. Cette étape de surveillance peut être mise en œuvre par une entité réseau 20 pouvant être distincte de l'entité réseau 10 et de l'équipement réseau 60 susmentionnés, ou confondue avec l'un de ceux-ci, selon les modes de réalisation. Lorsque l'entité réseau 20 est distincte de l'entité réseau 10, cette surveillance peut être notamment déclenchée par la réception d'un message de notification émis (étape D2) par l'entité réseau 10 après qu'il ait reçu la requête de l'équipement 1 pour obtenir des données.

L'établissement d'une session avec l'équipement 1 peut être directement détecté par l'entité réseau 20, comme illustré sur la figure 1. C'est en particulier le cas lorsque cette entité réseau 20 est confondue avec l'équipement réseau 60 et qu'une session est établie entre l'équipement 1 et l'équipement réseau 60, par exemple une session applicative. C'est aussi le cas lorsque la session est une session d'échange de données établie au moyen d'une entité de gestion de session 50, comme cela peut être le cas pour une session PDU (« PDU Session » en anglais), et que l'entité réseau 20 intercepte un message de l'entité de gestion de session confirmant l'établissement d'une telle session avec l'équipement 1.

L'établissement d'une session avec l'équipement UE peut aussi être indirectement détecté par l'entité réseau 20, au moyen d'une notification reçue d'une entité réseau impliqué dans l'établissement de cette session. C'est en particulier le cas lorsque cette entité réseau 20 est distincte de l'équipement réseau 60, qu'une session (par exemple une session applicative) est établie entre l'équipement UE et l'équipement réseau 60 et que l'équipement réseau 60 notifie l'entité réseau de l'établissement de cette session. C'est aussi le cas lorsque la session est une session d'échange de données établie au moyen d'une entité de gestion de session distincte de l'entité réseau 20, comme cela peut être le cas pour une session PDU (« PDU Session » en anglais), cette entité de gestion de session notifiant alors l'entité réseau 20 lorsqu'une telle session est établie.

Cette phase de surveillance S est une phase de surveillance temporaire, à l'issue de laquelle une décision de transmettre les données d_{UE} dans le plan de contrôle est prise si aucune décision de transmettre ces mêmes données dans le plan utilisateur n'a été prise auparavant durant cette phase de surveillance.

Pour ce faire, comme illustré ici en figure 1, cette phase de surveillance peut être initiée par le déclenchement (étape S11) d'une temporisation (« timer » en anglais) dès la détection de la réception de la requête émise par l'équipement utilisateur (i.e. à l'instant t₀ sur la figure 1), cette temporisation expirant après l'écoulement d'un certain délai d (étape S15), lequel peut être prédéterminé ou (re)configurable par l'opérateur du réseau de communication. Ce délai d peut être de l'ordre de quelques secondes, par exemple 5 ou 10 secondes.

Il peut être avantageux d'associer cette temporisation avec un identifiant de l'équipement utilisateur (par exemple son identifiant SUPI ou son identifiant matériel PEI) ayant émis la requête, typiquement en extrayant cet identifiant de la requête elle-même, ce qui permet de maintenir une liste de différentes temporisations (potentiellement déclenchées à différents instants) associées à différents identifiants d'équipements utilisateurs, et ainsi distinguer et gérer indépendamment différents équipements utilisateurs qui requerraient en même temps des données.

Deux cas de figure peuvent alors se présenter.

Dans un premier cas où l'établissement d'une session avec l'équipement UE est détecté avant l'expiration du délai d, il est alors déduit qu'un premier mode de transmission (A dans la figure 1), dans le plan utilisateur, est à utiliser pour fournir les données d_{UE} à l'équipement UE, au moyen de la session établie avec cet équipement 1 (étape S13).

Dans ce premier cas, les données d_{UE} sont alors transmises à cet équipement utilisateur 1 au moyen de la session dont l'établissement a été détecté. Lorsque l'entité réseau 20 n'est pas confondue avec l'équipement réseau 60, l'entité réseau 20 envoie une instruction à l'équipement réseau 60 (étape A11) pour déclencher cette transmission (étapes A12,A13). Lorsque l'équipement réseau 60 est accessible via à un réseau externe au réseau 100, cette transmission se fait au travers de l'entité réseau 40 du réseau 1 (pouvant être aussi désignée sous le terme de « passerelle ») permettant l'interconnexion du réseau 1 avec d'autres réseaux tiers pour ce qui est du plan utilisateur. Une fois les données d_{UE} reçues par l'équipement utilisateur 1, celui-ci peut les mémoriser (étape M1) pour pouvoir les utiliser ultérieurement.

Dans un deuxième cas où aucun établissement d'une session avec l'utilisateur n'est détecté avant l'expiration du délai d (e.g. lorsqu'une temporisation expire sans qu'une session n'ait été établie, cf. étape S15 sur la figure 1), il est déduit qu'un deuxième mode de transmission (B dans la figure 1), dans le plan de contrôle, est à utiliser pour fournir les données à l'équipement 1 (étape S17).

Dans ce deuxième cas, ces données d_{UE} sont insérées dans des messages de signalisation transmis à l'équipement 1 par une entité réseau 30, ces données d_{UE} étant ainsi transmises dans le plan de contrôle plutôt que dans le plan utilisateur du réseau.

Cette entité réseau 30, chargée ici de transmettre à l'équipement 1 les messages de signalisation dans lesquels ont été insérées les données utilisables par l'équipement 1, peut être distincte des entités réseaux 10,20,40 et de l'équipement réseau 60 susmentionnées, ou confondue avec l'un de ceux-ci (en particulier avec l'entité réseau 10), selon les modes de réalisation.

Lorsque l'entité réseau 30 n'est pas confondue avec l'équipement réseau 60, l'entité réseau 20 (en charge de surveiller l'établissement d'une session) envoie un message de requête à l'équipement réseau 60 (étape B11) lui instruisant de fournir à l'entité réseau 30 ces données (étape B12), l'entité réseau 30 pouvant alors insérer celles-ci dans des messages de signalisation (Msg (d_{UE})) qu'elle transmet à l'équipement UE (étape B13), qui peut les mémoriser après réception (étape M1) pour utilisation ultérieure.

La sélection du mode de transmission est ainsi effectuée par le réseau sur la base de la rapidité avec laquelle une session est établie avec l'équipement utilisateur UE après que celui-ci ait envoyé au réseau une requête pour obtenir des données, et ce de manière contrôlée par le réseau (donc par l'opérateur de celui-ci) au travers du délai d.

Il est fait à présent référence à la **Figure 2****,** laquelle illustre l'architecture d'un réseau tel que défini dans les spécifications 3GPP pour ce qui est de la norme 5G, dans laquelle peuvent être mises en œuvre les étapes de ce procédé selon différents modes de réalisation de la présente invention.

En particulier, dans un tel réseau, au-delà d'un réseau d'accès RAN pouvant comprendre un certain nombre de stations de base (dites « gNB » pour ce qui est de la 5G), le cœur 5GC de ce réseau comprend les entités suivantes :
Une (voire plusieurs) entité « AMF » (pour « Access and Mobility Management Function » en anglais), appartenant au plan de contrôle de ce réseau, pouvant recevoir des requêtes de l'équipement UE et pouvant transmettre des messages de signalisation à cet équipement UE.

Une (voire plusieurs) entité « SMF » (pour « Session Management Function » en anglais), appartenant au plan de contrôle de ce réseau et chargée de la gestion des sessions établies avec l'équipement utilisateur, en particulier des sessions dites « PDU Session » dans le plan utilisateur du réseau.

Une (voire plusieurs) entité « UPF » (pour « User Plane Function » en anglais), appartenant au plan utilisateur de ce réseau et chargée de transmettre les données, dans le plan utilisateur, entre l'équipement UE et d'autres équipements accessibles via d'autres réseaux.

Une (voire plusieurs) entité « NEF » (non illustrée., pour « Network Exposure Function » en anglais) qui permet d'exposer des capacités du réseau à des applications internes ou externes du réseau, au moyen d'APIs dites « northbound ».

Une (voire plusieurs) entité « UDM » (non illustrée, pour « Unified Data Management» en anglais), qui est une entité de gestion unifiée de données, et permet notamment de répertorier les Sessions PDU en cours, gérées par plusieurs entités SMF d'un même réseau.

Ainsi, dans une telle architecture 5G, le plan utilisateur est défini par les interfaces N3 et N6, tandis que le plan de contrôle est défini entre autres par les interfaces N1, N4 et N11.

Différents modes de réalisation illustratifs de l'invention vont maintenant être présentés, dans le cadre de la norme 5G, selon que telle ou telle entité réseau illustrée en figure 1 est mise en œuvre par telle ou telle entité réseau d'un réseau 5G tel qu'illustré en figure 2.

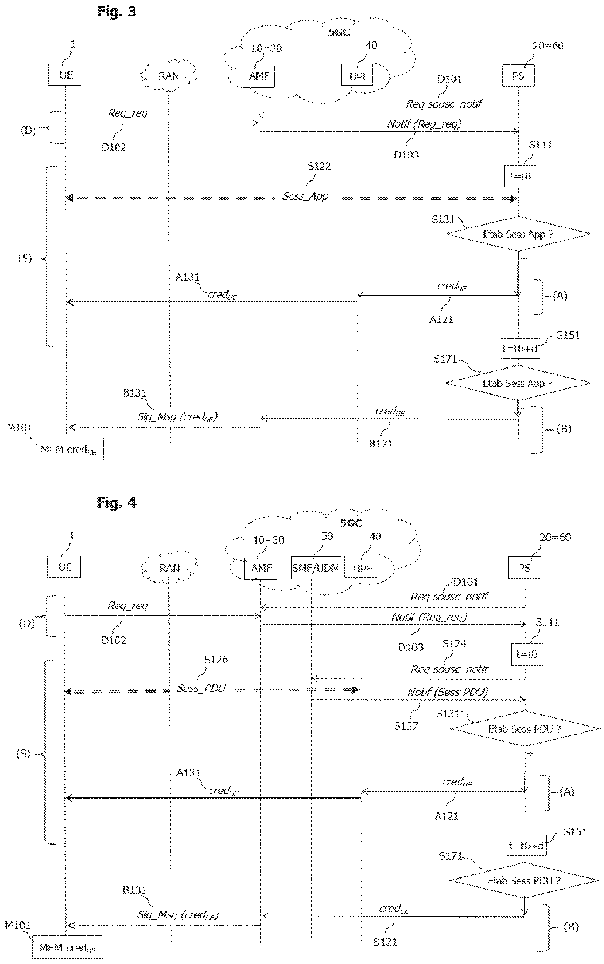

Il est fait à présent référence à la **Figure 3****,** laquelle illustre un premier mode de réalisation du procédé selon la présente invention.

Dans ce premier mode de réalisation, les entités réseaux 10 et 30 sont implémentées par une même entité AMF d'un réseau coeur 5G, l'entité réseau 40 est implémentée par une entité UPF de ce même réseau coeur 5G, tandis que l'entité réseau 20 et l'équipement réseau 60 sont implémentées par un serveur de provisionnement PS, externe à ce réseau mais accessible via l'entité UPF au moyen du protocole IP, dans lequel sont générées et/ou stockées des données d'authentification cred_{UE} utilisables par l'équipement utilisateur UE pour pouvoir s'authentifier auprès de certains réseaux afin d'y accéder.

Dans un premier temps, l'équipement utilisateur UE transmet (étape D102) au noeud AMF, qui la reçoit, une requête visant à obtenir les données d'authentification cred_{UE}, ici sous la forme d'une requête d'enregistrement au réseau, « REGISTER REQUEST » telle que définie dans la spécification **TS 23.501,** contenant une indication du souhait de l'équipement UE d'obtenir ces données (étape S101).

Une telle requête peut en particulier être une requête d'enregistrement spécifique, telle qu'une requête REGISTER contenant une indication que cet enregistrement est un enregistrement pour du provisionnement (« Register request for Onboarding » en anglais). Une telle requête peut aussi comprendre un identifiant de l'équipement UE, par exemple son identifiant SUPI ou son identifiant matériel PEI.

Lorsqu'elle reçoit cette requête et y constate que l'équipement UE sollicite la fourniture de données d'authentification, l'entité AMF transmet au serveur de provisionnement PS, éventuellement via une entité NEF, un message de notification de la réception d'une telle requête (étape D103), ce message de notification contenant avantageusement l'identifiant SUPI_{UE} de l'équipement UE afin de permettre au serveur PS d'identifier l'équipement UE requérant des données d'authentification.

Le noeud AMF peut être configuré pour émettre spontanément ce message de notification vers le serveur PS, après réception de la requête et détection dans celle-ci du souhait d'obtenir les données d'authentification.

Toutefois, dans un mode de réalisation particulier, le serveur PS peut transmettre (étape D101) au préalable au noeud AMF, éventuellement via une entité NEF, une requête en souscription de notification d'un événement correspondant à la réception d'une telle requête, afin de déclencher l'envoi d'un tel message de notification quand cet événement a effectivement lieu. Une telle requête en souscription peut être implémentée similairement à la requête de souscription illustrée dans le document 3GPP TS TR 23.700-07 (v.1.2.0), clause 6.30.3.2, étape 0b, en souscrivant auprès de l'AMF à la notification d'un événement de type « enregistrement pour provisionnement » (« register for onboarding » en anglais), ce qui permet alors à l'entité AMF de notifier le serveur PS dès qu'il reçoit une requête d'enregistrement contenant une indication selon laquelle cet enregistrement est pour du provisionnement.

Dès réception de cette notification émise par l'AMF, le serveur PS déclenche une phase S de surveillance de l'établissement d'une session avec cet équipement UE, ce qui peut être implémenté par le déclenchement (étape S111) à un instant t₀ d'une temporisation avec délai d'expiration d, pouvant avantageusement être spécifiquement associée à l'identifiant de l'équipement UE reçu dans la notification émise par le noeud AMF.

Dans cette phase S de surveillance, le serveur PS surveille les sessions applicatives qu'il établit avec des équipements utilisateurs, et notamment les identifiants des équipements utilisateurs fournis lors de la procédure d'établissement de ces sessions applicatives, afin de détecter si l'un de ces identifiants correspond à un identifiant déjà reçu dans une notification de détection de réception de requête telle que décrite et associé à une temporisation qui n'a pas encore expirée.

Dans un premier cas où une session applicative est effectivement établie (étape S122) entre le serveur PS et un équipement UE ayant envoyé une requête dont la réception a été détectée par l'entité AMF, et ce avant l'expiration d'un délai d démarrant avec la réception par le serveur PS de la notification transmise par le noeud AMF pour l'alerter de la réception de cette requête concernant le même équipement UE, le serveur PS en déduit qu'un mode de transmission dans le plan utilisateur (par l'intermédiaire de l'entité UPF), utilisant cette session applicative ainsi établie, est à utiliser (étape S131). Les données d'authentification cred_{UE} sont alors récupérées par le serveur PS (au moyen de l'identifiant SUPI_{UE} éventuellement) puis transmises à l'équipement UE au travers de l'entité UPF (étapes A121 et A131). Une fois reçues par l'équipement UE, celui-ci mémorise ces données d'authentification cred_{UE} (étape M101). Ainsi, par la suite, lorsque l'équipement UE cherchera à accéder à un équipement ou un réseau nécessitant une authentification avant accès, il pourra transmettre ces données cred_{UE} pour obtenir l'autorisation d'accès.

Dans un deuxième cas où la phase S de surveillance s'achève avec l'expiration du délai d (étape S151) sans qu'aucun établissement de session applicative n'ait été détecté entre le serveur PS et un équipement UE (en particulier quand aucun établissement d'une session applicative n'est détecté avant l'expiration d'une temporisation associé à l'identifiant de cet équipement UE), le serveur PS en déduit qu'un mode de transmission dans le plan de contrôle est à utiliser (étape S171).

Dans ce cas, le serveur PS transmet les données d'authentification cred_{UE} au nœud AMF (étape B121), éventuellement par l'intermédiaire d'une entité UDM (ainsi que via une entité NEF notamment lorsque le serveur PS est externe au réseau 100), le noeud AMF l insérant ces données d'authentification cred_{UE} dans un ou plusieurs message(s) de signalisation avant de le(s) transmettre (étape 8131) à l'équipement UE. Il peut s'agir en particulier de messages de signalisation selon la procédure de mise à jour de paramètres d'équipement utilisateur (« UE Parameters Update » en anglais) telle que décrite à la clause 4.20 de la spécification 3GPP TS 23.502 (v16.7.1).

Une fois ce(s) message(s) de signalisation reçu(s), l'équipement UE peut procéder à l'extraction de ces données d'authentification cred_{UE} afin de les mémoriser (étape M101) pour usage ultérieur.

Ce premier mode de réalisation est avantageux en ce qu'il est principalement implémenté au niveau du serveur de provisionnement, et donc requiert un minimum de modification des entités réseaux coeur 5G, notamment dans son implémentation recourant à une souscription à un événement auprès de l'AMF, qui peut réutiliser un protocole déjà existant.

Il est fait à présent référence à la **Figure 4****,** laquelle illustre un deuxième mode de réalisation du procédé selon la présente invention.

Dans ce deuxième mode de réalisation, les entités réseaux 10-40 et l'équipement réseau 60 sont implémentées similairement au premier mode de réalisation susmentionné. Ce deuxième mode de réalisation se distingue toutefois en ce qu'il fait intervenir en outre une entité de gestion de session 50, ici implémentée par une entité SMF du réseau coeur 5G, et la détection de l'établissement d'une session PDU au moyen de cette entité SMF.

Dans ce deuxième mode de réalisation, les premières étapes D101 à D103 et S111 sont identiques à celles du premier mode de réalisation.

Toutefois, ici, le serveur PS surveille si une session PDU est établie avec l'équipement UE au moyen de l'entité SMF, sous un certain délai d après la réception par le noeud AMF de la requête émise par l'équipement UE.

L'établissement d'une telle session PDU n'est pas détecté directement par le serveur PS, mais indirectement sur notification de cet établissement par le noeud SMF qui intervient dans l'établissement de cette session. Autrement dit, lorsqu'une session PDU est établie entre le réseau et l'équipement UE (étape S126), le noeud SMF ayant géré l'établissement de cette session peut déclencher la transmission au serveur PS d'un message de notification l'alertant de l'établissement d'une session PDU avec l'équipement UE (étape S127), cette notification incluant avantageusement un identifiant de cet équipement UE (tel que son identifiant SUPI ou son identifiant matériel PEI), afin que le serveur PS puisse associer cet établissement de session avec une temporisation déclenchée en association avec le même identifiant. Cette notification peut avantageusement également contenir l'adresse IP alloué à l'équipement UE, laquelle peut alors être utilisée par le serveur PS pour établir une connexion avec l'équipement UE via la session PDU.

Le noeud SMF peut émettre spontanément ce message de notification directement vers le serveur PS, ou instruire à une entité UDM de le faire, après établissement d'une session PDU avec l'équipement UE. Lorsqu'il existe plusieurs serveurs PS, le noeud SMF peut mémoriser une table de correspondance stockant un identifiant de l'équipement UE (SUPI ou PEI typiquement) et le serveur PS à utiliser pour cet équipement, qui permet au noeud SMF de retrouver le serveur PS à notifier au moyen de cet identifiant de l'équipement UE.

Dans un mode particulier de réalisation, l'entité SMF n'envoie un tel message de notification que pour les équipements UE qui ont au préalable transmis une requête spécifique pour obtenir les données d_{UE} (étape D101), en particulier une requête d'enregistrement pour du provisionnement (« for onboarding ») telle que décrite précédemment. A cette fin, après avoir reçu une telle requête, l'entité AMF peut transmettre à une entité UDM un message d'information quant au fait que l'équipement UE est enregistré pour du provisionnement, l'entité SMF récupérant alors cette information auprès de l'entité UDM lors de l'établissement d'une session PDU avec ce même équipement UE. Alternativement, l'entité AMF peut mémoriser cette information dans le contexte qu'il conserve de l'équipement UE, et la transmettre directement à l'entité SMF lors de l'établissement de la session PDU.

Dans un autre mode de réalisation, le serveur PS peut transmettre au préalable, au noeud SMF (quand il y a un seul rioeud SMF dans le réseau 100) ou à un noeud UDM (quand il y a un ou plusieurs nœuds SMF dans le réseau 100) une requête en souscription de notification d'un événement correspondant à l'établissement d'une telle session PDU (étape S124), afin de déclencher l'envoi d'un tel message de notification quand cet événement a effectivement lieu. Cette requête en souscription peut être en particulier avantageusement envoyée après que le serveur PS ait reçu la notification de l'entité AMF (et donc déclenché la phase de surveillance) et contenir l'identifiant de l'équipement UE reçu dans cette notification de l'AMF, afin de souscrire auprès du SMF (ou de l'UDM) à un événement d'établissement de session PDU spécifiquement associé à un équipement UE ayant requis la fourniture des données d'authentification qui lui sont utiles. Dans le cas d'une souscription à l'entité UDM, lorsqu'un des noeuds SMF du réseau participe à l'établissement d'une session PDU avec un équipement UE, ce nœud SMF envoie alors au noeud UDM un message (selon le service Nudm_UECM_Registration par exemple) pour l'informer de l'établissement de cette session PDU avec un équipement UE, le nœud UDM pouvant alors transmettre le message de notification au serveur PS comme indiqué précédemment. L'envoi de ce message peut être effectué pour les seuls équipements UE enregistrés, par l'AMF, comme ayant émis une requête spécialement pour obtenir des données (e.g. « Onboarding Request »), comme décrit précédemment.

Dans un premier cas où une session PDU est effectivement établie avec l'équipement UE ayant envoyé une requête reçue par l'AMF (étape S126), et où cet événement est notifié par le rioeud SMF (ou le noeud UDM) au serveur PS au moyen d'un message de notification contenant avantageusement l'adresse IP allouée à l'équipement UE, et ce avant l'expiration d'un délai d démarrant avec la réception par ce même serveur PS de la notification transmise par le noeud AMF pour l'alerter de la réception de cette requête, le serveur PS en déduit alors qu'un mode de transmission dans le plan utilisateur, utilisant cette session PDU ainsi établie, est à utiliser (étape S131). Dans ce cas, le serveur PS peut établir une connexion avec l'équipement UE au moyen de l'adresse IP allouée à cet équipement, via la session PDU gérée par le noeud SMF et récupérer les données d'authentification cred_{UE} (au moyen éventuellement de l'identifiant SUPI_{UE} lorsqu'il est transmis). Ces données sont alors transmises à l'équipement UE au travers de l'entité UPF (étapes A121 et 131), qui peut les mémoriser pour utilisation ultérieure (étape M101), similairement à ce qui est décrit pour le premier mode de réalisation.

Dans un deuxième cas où aucun établissement de session PDU n'est notifié par l'entité SMF au serveur PS avant l'expiration de ce même délai d (étape S151), le serveur PS en déduit qu'un mode de transmission dans le plan de contrôle est à utiliser (étape S171). Le serveur PS transmet alors les données d'authentification cred_{UE} au noeud AMF (étape 8121), éventuellement par l'intermédiaire d'une entité NEF (notamment lorsque le serveur PS est externe au réseau 100) et/ou une entité UDM comme indiqué précédemment, le noeud AMF insérant ces données dans des messages de signalisation avant de les transmettre à l'équipement UE (étape 8131), qui peut les extraire après réception et les mémoriser (étape M101) pour utilisation ultérieure, similairement à ce qui est décrit pour le premier mode de réalisation.

Ce deuxième mode de réalisation est avantageux en ce que l'équipement UE n'a pas besoin d'indiquer au serveur PS son identifiant SUPI ou PEI ce qui simplifie l'implémentation lorsque la communication avec le serveur PS et l'enregistrement dans le réseau sont réalisés par des composants distincts.

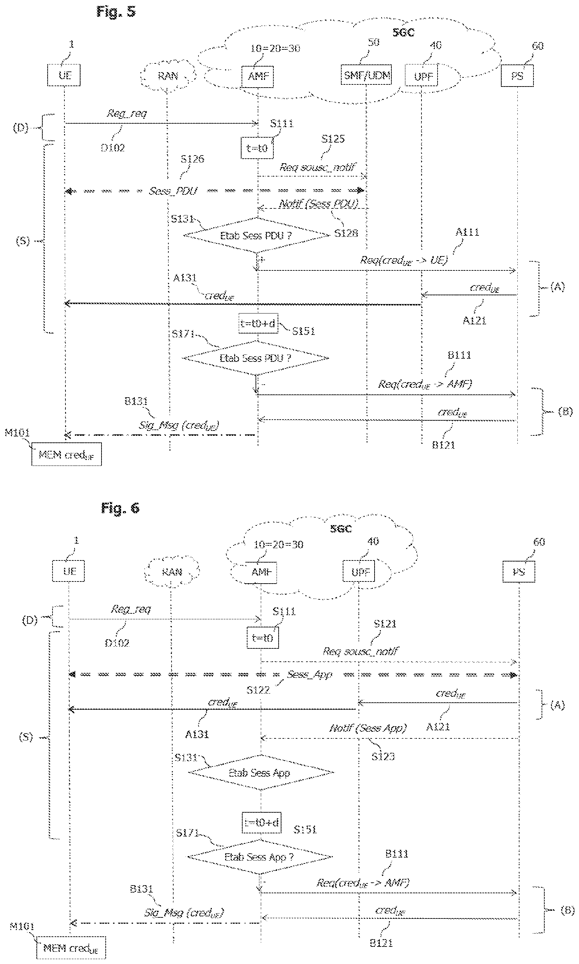

Il est fait à présent référence à la **Figure 5**, laquelle illustre un troisième mode de réalisation du procédé selon la présente invention.

Dans ce troisième mode de réalisation, les entités réseaux 10,20 et 30 sont implémentées par une entité AMF d'un réseau coeur 5G, l'entité réseau 40 et l'équipement réseau 60 étant toujours implémentés respectivement par une entité UPF et un server de provisionnement PS externe, similairement aux deux premiers modes de réalisation.

Ce troisième mode de réalisation se distingue ainsi en ce que c'est le noeud AMF qui est chargé de surveiller si une session est établie avec l'équipement UE avant l'expiration d'un délai d après la réception d'une requête de l'UE pour obtenir des données utilisables par cet équipement UE. Il se distingue aussi en ce qu'une entité de gestion de session, implémentée par une entité SMF de ce même réseau coeur 5G, est directement impliquée dans le procédé.

Dans ce troisième mode de réalisation, l'entité AMF reçoit tout d'abord une requête émise par l'équipement UE similaire à celle déjà décrite dans le premier mode de réalisation (étape D102).

A ce stade, l'entité AMF commence à surveiller, pendant un certain délai d, si une session PDU est établie avec l'équipement UE au moyen de l'entité SMF, typiquement en déclenchant une temporisation expirant une fois ce délai d écoulé (étape S111) Dans ce troisième mode de réalisation, cette surveillance par l'entité AMF peut être indirecte, quand elle est basée sur la réception en provenance de l'entité SMF d'une notification l'alertant de l'établissement d'une session PDU avec l'équipement PDU. Pour pouvoir identifier l'équipement UE sur lequel effectuer la surveillance, après avoir reçu la requête de l'équipement UE, l'entité AMF peut transmettre (étape S125) au noeud SMF une requête incluant un identifiant SUPI_{UE} de cet équipement UE (par exemple son identifiant SUPI ou son identifiant matériel PEI), cette requête invitant le noeud SMF à transmettre (étape S128) à l'entité AMF un message de notification lorsqu'une session PDU est établie, au moyen de ce noeud SMF, avec un équipement utilisateur identifié par ce même identifiant SUPI_{UE}. Ce message de notification peut notamment contenir l'adresse IP de l'équipement UE, laquelle pourrait être communiquée ultérieurement au serveur PS pour établir une connexion avec l'équipement UE pour lui fournir des données dans le plan utilisateur.

Alternativement, quand il y a plusieurs entités SMF dans le réseau 100 et que l'entité SMF n'est pas encore sélectionnée au moment de l'enregistrement, l'entité AMF peut envoyer cette requête de souscription à l'entité UDM, qui est alors chargée d'informer l'AMF lorsqu'une session PDU est établie avec ce même équipement utilisateur UE, suite à la réception par l'entité UDM d'un message de notification de l'établissement d'une session PDU émanant du noeud SMF ayant participé à cet établissement. Cette requête peut être une requête de souscription utilisant un protocole de souscription à des notifications d'événement de l'entité SMF (et/ou de l'entité UDM quand il y a plusieurs SMF) à l'entité AMF, et en particulier prendre la forme d'un message « Nsmf_EventExposure_Suscribe » pour le SMF ou « Nudm_EventExposure_Suscribe » pour l'UDM tels que définis dans les spécifications 3GPP.

Alternativement, cette surveillance par l'AMF peut être directe : plutôt que d'attendre de recevoir une notification de l'entité SMF l'alertant d'un l'éventuel établissement d'une session PDU, l'entité AMF peut aussi surveiller les messages échangés entre l'équipement UE et l'entité SMF, de sorte à détecter un éventuel message de confirmation de l'établissement d'une session PDU, et ce pendant un certain délai d après la réception de la requête d'enregistrement de l'équipement UE (typiquement en déclenchant une temporisation expirant une fois ce délai d écoulé). L'entité AMF peut ici avantageusement identifier l'équipement UE qu'elle surveille, par la détection d'un identifiant d'équipement utilisateur extrait de l'éventuel message de confirmation qu'elle intercepterait avant l'expiration du délai d, l'entité AMF pouvant alors comparer cet identifiant extrait avec l'identifiant SUPI_{UE} avantageusement associé à la temporisation déclenchée après la réception de la requête d'enregistrement dont est extrait cet identifiant SUPI_{UE}.

Dans un premier cas où une session PDU est effectivement établie avec l'équipement UE ayant préalablement envoyé à l'entité AMF une requête d'enregistrement pour obtenir des données utilisables, et où cet événement est soit notifié par le nœud SMF (ou par un noeud UDM, comme expliqué pour le deuxième mode de réalisation) au noeud AMF, soit directement détecté par l'AMF avant l'expiration d'un délai d après la réception par ce même rioeud AMF de cette requête d'enregistrement, le noeud AMF en déduit alors qu'un mode de transmission dans le plan utilisateur, utilisant cette session PDU ainsi établie, est à utiliser (étape S131).

Dans ce cas, une session PDU étant établie avec l'équipement UE, l'équipement UE peut se connecter au serveur PS au moyen de l'adresse IP du serveur PS (soit parce qu'il la connaît, soit parce qu'il l'a reçue lors de son enregistrement). Une fois l'équipement UE connecté au serveur PS, le serveur PS peut alors récupérer les données d'authentification cred_{UE} associées à cet équipement UE, puis les transmettre à l'équipement UE au travers de l'entité UPF, au moyen de la connexion établie via la session PDU gérée par le noeud SMF (étapes A121 et A131). L'équipement UE peut alors les mémoriser pour utilisation ultérieure (étape M101), similairement à ce qui est décrit pour le premier mode de réalisation.

Dans une implémentation alternative, lorsqu'une session PDU est établie avec l'équipement UE, l'équipement UE peut attendre de recevoir une connexion depuis le serveur PS, au moyen de l'adresse IP de l'équipement UE, transmise par le SMF ou l'UDM à l'AMF dans la notification d'établissement de session PDU (étape S128). L'entité AMF transmet alors (étape A111) au serveur PS (éventuellement via l'entité NEF) une requête d'instruction de transmission des données d'authentification cred_{UE}, incluant avantageusement l'adresse IP allouée à l'équipement UE, ainsi qu'éventuellement son identifiant SUPI_{UE}. Sur réception d'une telle requête, le serveur PS peut alors se connecter à l'équipement UE au moyen de l'adresse IP de celui-ci, via la session PDU gérée par le noeud SMF, et récupérer les données d'authentification cred_{UE} associées à cet équipement UE (par exemple au moyen de son identifiant SUPI_{UE} ou de tout autre information qu'il aurait pu obtenir de l'équipement UE). Ces données sont alors transmises à l'équipement UE au moyen de cette connexion, au travers de l'entité UPF (étapes A121 et A131). L'équipement UE peut alors les mémoriser pour utilisation ultérieure (étape M101), similairement à ce qui est décrit pour le premier mode de réalisation.

Dans un deuxième cas où aucun établissement de session PDU n'est ni notifié par une entité SMF ou UDM à l'entité AMF, ni détecté directement par l'AMF lui-même avant l'expiration de ce même délai d, l'entité AMF en déduit qu'un mode de transmission dans le plan de contrôle est à utiliser.

L'entité AMF transmet alors (étape B111) au serveur PS, éventuellement via une entité NEF, une requête d'obtention des données d'authentification cred_{UE}, incluant éventuellement l'identifiant SUPI_{UE} de l'équipement UE. Sur réception d'une telle requête, le serveur PS peut alors récupérer les données d'authentification cred_{UE} éventuellement associées à cet équipement UE, puis les transmettre dans un message à l'entité AMF (étape B121), éventuellement via une entité NEF (notamment lorsque le serveur PS est externe au réseau) ainsi qu'une entité UDM comme indiqué précédemment (auquel cas le message de l'UDM à l'AMF peut être un message du type « Nudm_SDM_Notification » tel que défini dans le standard 3GPP sur la 5G).L'entité AMF insère alors ces données d'authentification cred_{UE} dans un ou plusieurs messages de signalisation avant de le(s) transmettre à l'équipement UE (étape B131), qui peut les extraire après réception et les mémoriser (étape M101) pour utilisation ultérieure, similairement à ce qui est décrit pour le premier mode de réalisation.

Ce troisième mode de réalisation est avantageux en ce que la gestion de la sélection du mode de transmission est confiée à une seule entité du réseau coeur 5G, à savoir l'AMF. Ceci permet de minimiser les échanges de messages de signalisation dans le réseau, et donc de contrôler le volume de messages échangés au sein du réseau, qui peut s'avérer important lorsqu'un très grand nombre d'équipements utilisateur cherchent à obtenir des données d'authentification. Ceci permet aussi une application aisée de l'invention à des serveurs de provisionnement tiers n'ayant ni les ressources pour mettre en oeuvre la surveillance des sessions dans le réseau de communication, ni l'exigence de tenir compte des contraintes de ce réseau de communication.

Il est fait à présent référence à la **Figure 6****,** laquelle illustre un quatrième mode de réalisation du procédé selon la présente invention.

Dans ce quatrième mode de réalisation, les entités réseaux 10-40 et l'équipement réseau 60 sont implémentées similairement au troisième mode de réalisation. Ce quatrième mode de réalisation se distingue toutefois en ce que l'entité AMF est chargée de détecter indirectement l'établissement d'une session applicative entre l'équipement utilisateur UE et l'équipement réseau 60.

Les premières étapes D102 et S111, respectivement dernières étapes à partir de l'étape S151, sont similaires aux premières, respectivement dernières, étapes du troisième mode de réalisation.

Toutefois ici, au lieu de surveiller l'établissement d'une session PDU, l'AMF surveille s'il reçoit un message de notification émanant du serveur PS (étape S123) l'informant que les données d_{UE} ont déjà été transmises par une session applicative établie entre le serveur PS et l'équipement utilisateur (étape S122), auquel cas il en conclut qu'un mode de transmission dans le plan utilisateur a déjà été utilisés avec succès (étape S131). Le serveur PS peut spontanément émettre un tel message de notification une fois que la transmission des données a réussi ou ne le faire qu'après que l'AMF lui ait préalablement transmis une requête en souscription d'une telle notification (étape S121), incluant avantageusement l'identifiant SUPI_{UE} de l'équipement utilisateur (typiquement extrait de la requête pour obtenir des données) afin que le serveur PS ne notifie l'AMF que lorsqu'une session applicative est établie avec l'équipement UE identifié avec cet identifiant.

Ce quatrième mode de réalisation est avantageux en ce qu'il minimise le nombre d'entités réseaux impliquées dans le procédé, l'entité AMF étant chargée aussi bien de détecter la réception d'une requête de l'équipement UE que de surveiller et détecter elle-même l'éventuel établissement d'une session PDU avec cet équipement UE, et d'éventuellement transmettre les données d'authentification dans des messages de signalisation, ce qui permet de minimiser les échanges de messages de signalisation dans le réseau, et donc de contrôler le volume de messages échangés au sein du réseau, qui peut s'avérer important lorsqu'un très grand nombre d'équipements utilisateur cherchent à obtenir des données d'authentification. En outre, cela permet d'éviter de recourir à l'interception par l'AMF de messages entre l'équipement UE et le SMF pour détecter la session PDU, comme proposé dans le troisième mode de réalisation, et donc de conserver la séparation fonctionnelle entre l'AMF et le SMF. Ce quatrième mode de réalisation est aussi avantageux en ce qu'il permet, lorsqu'une session PDU est établie mais que la fourniture de données d'authentification n'aboutit pas (par exemple un débit insuffisant en raison de mauvaises conditions radio ou une saturation du réseau), de basculer sur un mode de transmission dans le plan de contrôle, qui a plus de chances de fonctionner en conditions dégradées.

Il est fait à présent référence à la **Figure 1****,** laquelle illustre une entité réseau 10 chargée de détecter la réception d'une requête d'un équipement utilisateur pour obtenir des données utilisables par ce même équipement utilisateur.

Cette entité réseau 10, déjà introduite en référence à la figure 1, comprend un module de communication 11, lui permettant d'échanger des messages avec d'autres entités réseaux d'un réseau de communication ainsi qu'avec l'équipement utilisateur, un module de traitement 13 (comprenant un ou plusieurs processeurs pouvant exécuter des instructions de programmes informatiques) et un module de mémorisation 25 (pouvant comprendre une mémoire vive et une mémoire morte pour stocker des instructions de programmes informatiques).

Le module de traitement 13 est notamment configuré pour, suite à la réception par le module 11 d'une requête émise par un équipement utilisateur pour obtenir des données utilisables par cet équipement utilisateur, déclencher une phase de surveillance S comme précédemment écrite :
- soit en déclenchant directement cette phase de surveillance S quand l'entité réseau 10 est aussi en charge de cette phase de surveillance ;
- soit en préparant un message de notification alertant de la réception d'une telle requête, éventuellement en y insérant un identifiant de l'équipement utilisateur extrait de cette requête, et en instruisant au module 11 de transmettre ce message de notification à une autre entité réseau chargée de cette phase de surveillance S.

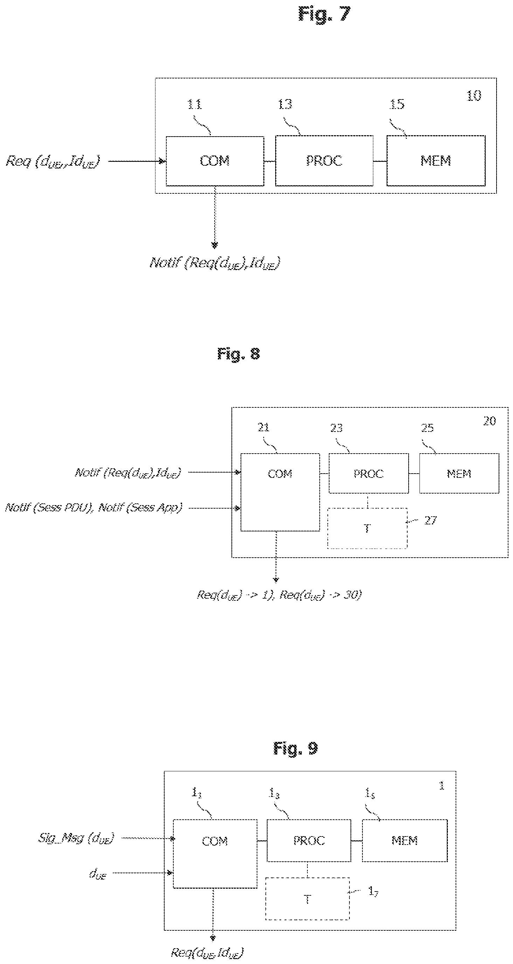

Il est fait à présent référence à la **Figure 8****,** laquelle illustre une entité réseau 20 chargée de surveiller l'établissement d'une session avec un équipement utilisateur selon la présente invention.

Cette entité réseau 20, déjà introduite en référence à la figure 1, comprend un module de communication 21, lui permettant d'échanger des messages avec d'autres entités réseaux d'un réseau de communication, un module de traitement 23 (comprenant un ou plusieurs processeurs) et un module de mémorisation 25 (pouvant comprendre une mémoire vive et une mémoire morte).

Le module de traitement 23 est notamment configuré pour, suite à la détection de la réception d'une requête émise par un équipement utilisateur pour obtenir des données utilisables par cet équipement utilisateur (par la réception de cette requête, ou d'une notification alertant de la réception de cette requête, par le module de communication 21), enclencher une phase de surveillance S de l'établissement d'une session avec cet équipement utilisateur, impliquant le réseau de communication.

Dans un mode de réalisation particulier, cette entité réseau 20 comprend un module de temporisation 27 configuré pour déclencher une (voire plusieurs) temporisation qui, une fois déclenchée, expire après une certaine durée d, pouvant être prédéterminée, fixe ou bien configurable par l'opérateur de l'entité réseau 20. Ce module de temporisation 27 peut être un minuteur ou un chronomètre (« timer » an anglais) implémenté sous forme logicielle ou matérielle (par exemple sous forme d'un chronomètre distinct).

Ce module de temporisation 27 peut notamment déclencher plusieurs temporisations distinctes, à différents instants t₀ de déclenchement, chacune de ces temporisations pouvant avantageusement être associées, lors de leur déclenchement, à un identifiant d'équipement utilisateur reçu dans une notification de détection de réception d'une requête d'obtention de données émise par cet équipement utilisateur. Ceci permet au module de traitement 23 de retrouver facilement la temporisation spécifiquement associée à un équipement utilisateur avec lequel l'établissement d'une session est détecté, par comparaison avec l'identifiant d'équipement utilisateur récupéré lors de la détection de l'établissement de la session.

Le module de traitement 23 est ainsi configuré pour :
Soit, lorsqu'il est informé de l'établissement d'une session avant l'expiration de la phase temporaire de surveillance, préparer un message d'instruction et instruire au module 21 de le transmettre à un équipement réseau, pour déclencher la transmission des données utilisables requises à l'équipement utilisateur dans le plan utilisateur au moyen de cette session.

Soit, lorsqu'il n'est pas informé de l'établissement d'une session avant l'expiration de la phase temporaire de surveillance, envoyer un message d'instruction à cet équipement réseau pour qu'il fournisse des données à une entité réseau chargée de les insérer dans des messages de signalisation destinés à l'équipement utilisateur.

Le module de traitement 23 peut être configuré pour extraire un identifiant de l'équipement utilisateur (par exemple sous format SUPI ou PEI) dans la requête, ou la notification de la réception de cette requête par une autre entité réseau, reçue par le module 21, le mémoriser dans le module 25 et l'insérer dans un des messages d'instruction ci-avant.

Il est fait à présent référence à la **Figure 9****,** laquelle illustre un équipement utilisateur 1 selon la présente invention.

Cette équipement utilisateur 1, déjà introduit en référence à la figure 1, comprend un module de communication 1₁, lui permettant d'échanger des messages avec des entités réseaux d'un réseau de communication (par exemple des messages sous forme radio lorsqu'il s'agit d'un réseau mobile, auquel cas le module 1₁ comprend au moins une antenne radio), un module de traitement 1₃ (comprenant un ou plusieurs processeurs) et un module de mémorisation 1₅ (pouvant comprendre une mémoire vive et une mémoire morte).

Le module de traitement 1₃ est notamment configuré pour, lorsque l'équipement utilisateur 1 (ou une application logicielle installée sur cet équipement) souhaite récupérer des données d_{UE} telles que précédemment décrites, préparer une requête pour obtenir ces données (par exemple en insérant une indication que ces données sont requises dans une requête d'enregistrement au réseau) et instruire au module 1₁ de transmettre cette requête à une entité réseau 10 du réseau 100 apte à recevoir cette requête (i.e. l'entité AMF pour un réseau 5G).

Le module de communication 1₁ est apte à recevoir, en retour de cette requête, au moins un message de signalisation contenant lesdites données d_{UE} requises dans cette requête, en provenance d'une entité réseau 30 du réseau 100. Il peut alternativement être apte à recevoir ces données d_{UE} transmises dans le plan utilisateur (i.e, par l'interface N3 illustrée en figure 1 pour un réseau 5G), voire être apte à recevoir ces données d_{UE} selon l'un quelconque de ces deux modes alternatifs de transmission.

Lorsque le module de communication 1₁ est configuré pour recevoir les données dans le plan utilisateur, le module de traitement 1₃ peut avantageusement être configuré pour insérer un identifiant dudit équipement utilisateur (par exemple son identifiant SUPI ou PEI) dans une requête de connexion destinée à l'équipement réseau 60 auprès duquel sont disponibles lesdites données d_{UE} (e.g. un serveur PS de provisionnement, notamment pour des données d'authentification à récupérer) et transmettre ladite requête de connexion vers cet équipement réseau 60. Dans le cas où le module de traitement 1₃ comprend un premier sous-module de traitement de signalisation, communiquant avec l'entité AMF, et un deuxième sous-module de traitement applicatif, communiquant avec l'entité réseau 60, le module de traitement applicatif demande l'identifiant de l'équipement utilisateur auprès du module de traitement de signalisation avant de l'insérer dans la requête en connexion.

Ceci permet d'éviter d'interrompre la surveillance mise en oeuvre par l'équipement réseau 60 (et donc d'éviter de déclencher la fourniture des données d_{UE} par le biais de messages de signalisation) et de déclencher la récupération des données d_{UE} par l'équipement réseau, au moyen de cet identifiant, lequel peut alors les transmettre à l'équipement utilisateur 1, qui les reçoit au moyen de son module de communication 1₁, via une connexion établie suite à cette requête.

Dans un mode particulier de réalisation, l'équipement utilisateur 1 comprend également un module de temporisation 1₇ qui, une fois déclenchée, expire après une certaine durée d', pouvant être prédéterminée, fixe ou bien configurable par l'utilisateur de cet équipement utilisateur ou par une application logicielle tournant sur cet équipement. Ce module de temporisation 1₇ peut être un temporisateur ou un chronomètre (« timer » en anglais) implémenté sous forme logicielle ou matérielle.

Une telle temporisation peut être utilisée, par l'équipement utilisateur 1, pour influencer le mode de transmission sélectionné par le réseau pour lui transmettre les données d_{UE}. En particulier, lorsqu'une transmission dans le plan de contrôle est privilégiée du côté équipement utilisateur, cette temporisation peut être déclenchée par l'envoi de la requête pour obtenir les données d_{UE} et bloquer jusqu'à son expiration l'émission de requête d'établissement de session vers le réseau 100, que ce soit une requête d'établissement de session de données vers une entité réseau du réseau 100 (type session PDU pour la 5G) et/ou une requête de d'établissement de session applicative vers l'équipement réseau 50 disposant de ces données. En choisissant bien la valeur de la durée de temporisation d' (par exemple en prenant une valeur supérieure à la valeur de la durée d utilisée par l'entité réseau 20 lors de sa phase de surveillance), on s'assure que les données d_{UE} seront reçues dans des messages de signalisation. Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention tel que revendiqué dans les revendications.

Ainsi, des exemples d'application de l'invention au cas spécifique d'un réseau mobile de cinquième génération ont été illustrés, mais l'invention peut également s'appliquer à un réseau mobile de quatrième génération (auquel cas, les entités réseaux 10,20,30 pourraient être implémentées par une entité de gestion de mobililté, « Mobility Management Entity » en anglais), ou à des réseaux mobiles de génération ultérieure. De plus, comme déjà indiqué, les différentes entités réseaux mentionnés illustrées par la figure 1 peuvent être distinctes les unes des autres, mais il est aussi possible que certaines d'entre elles soient combinées au sein d'une même entité réseau, en fonction de l'architecture du réseau dans lequel est appliquée l'invention.

## Revendications

1. Procédé de transmission de données d'un réseau de communication vers un équipement utilisateur (1), comprenant les étapes suivantes :
détecter (D) la réception d'une requête pour obtenir des données (d_{UE}), émise par ledit équipement utilisateur ;
surveiller (S) si une session avec ledit équipement utilisateur au travers du réseau de communication est établie suite à la détection de la réception de ladite requête ; et
si aucun établissement d'une session avec ledit équipement utilisateur n'est détecté avant l'expiration d'un délai (d) après la détection de la réception de ladite requête, transmettre (B) vers l'équipement utilisateur au moins un message de signalisation (Sig_Msg(d_{UE})) contenant lesdites données (d_{UE}).

2. Procédé selon la revendication 1, comprenant en outre, lorsque l'établissement d'une session avec l'équipement utilisateur est détecté avant l'expiration dudit délai (d), la transmission (A) vers l'équipement utilisateur, au moyen de ladite session, desdites données (d_{UE}).

3. Procédé selon l'une des revendications 1 ou 2, dans lequel lesdites données sont des données utilisables par l'équipement utilisateur, disponibles auprès d'un équipement réseau (60) mettant en oeuvre ladite surveillance (S) de l'établissement d'une session avec l'équipement utilisateur, distinct d'une première entité réseau (10) recevant ladite requête émise par l'équipement utilisateur (D102), la détection de la réception de ladite requête comprenant en outre la transmission (D103), de la première entité réseau à l'équipement réseau (60), d'un message de notification de la réception de ladite requête par la première entité réseau (10), ladite surveillance (S) étant déclenchée par la réception du message de notification par l'équipement réseau(60).

4. Procédé selon la revendication 3, dans lequel ladite session est une session applicative établie entre l'équipement réseau (60) et l'équipement utilisateur (S122).

5. Procédé selon la revendication 3, dans lequel ladite session est une session d'échange de données établie au moyen d'une entité de gestion de session (50), ladite surveillance de l'établissement d'une session comprenant la surveillance, par l'équipement réseau (60), de la réception d'un message de notification de l'établissement d'une session d'échange de données (S127) dont l'émission est déclenchée par ladite entité de gestion de session suite à l'établissement d'une session d'échange de données au moyen de l'entité de gestion de session .

6. Procédé selon l'une des revendications 1 ou 2, dans lequel lesdites données sont disponibles via un équipement réseau (60) distinct d'une deuxième entité réseau (20) mettant en œuvre ladite surveillance (S) de l'établissement d'une session avec l'équipement utilisateur, ladite transmission (B) vers l'équipement utilisateur des messages de signalisation (Sig_Msg(d_{UE})) contenant lesdites données comprenant :
la transmission, de la deuxième entité réseau à l'équipement réseau (60), d'une requête (B11) instruisant à l'équipement réseau (60) de transmettre (812) lesdites données à une troisième entité réseau (30) ; et
la transmission (B13), de ladite troisième entité réseau vers l'équipement utilisateur, d'au moins un message de signalisation contenant lesdites données.

7. Procédé selon la revendication 6, dans lequel la deuxième entité réseau (20) reçoit ladite requête (D102), la réception de ladite requête déclenchant la surveillance (S) de l'établissement d'une session avec l'équipement utilisateur.

8. Procédé selon la revendication 6 ou 7, dans lequel ladite session est une session établie au moyen d'une entité de gestion de session (50), ladite surveillance de l'établissement d'une session comprenant la surveillance, par la deuxième entité réseau (20), de la réception d'un message de notification (S128) dont l'émission est déclenchée par ladite entité de gestion de session suite à l'établissement d'une session établie au moyen de l'entité de gestion de session (S126).

9. Procédé selon la revendication 6 ou 7, dans lequel ladite session est une session d'échange de données établie au moyen d'une entité de gestion de session (50), ladite surveillance de l'établissement d'une session comprenant la surveillance, par la deuxième entité réseau, de la transmission entre l'entité de gestion de session et l'équipement utilisateur d'un message de confirmation de l'établissement d'une session d'échange de données avec l'équipement utilisateur (S126).

10. Procédé selon la revendication 6 ou 7, dans lequel ladite session est une session applicative établie entre l'équipement réseau (60) et l'équipement utilisateur, l'équipement réseau (60) transmettant à la deuxième entité réseau (20) un message de notification d'établissement d'une session d'échange de données (S123) suite à l'établissement de ladite session applicative (S122).

11. Entité réseau (20) apte à être utilisée dans un réseau de communication (100), ladite entité réseau étant configurée pour :
surveiller (S) si une session avec un équipement utilisateur au travers du réseau de communication est établie suite à la détection de la réception d'une requête pour obtenir des données (d_{UE}), émise par ledit équipement utilisateur ; et
si aucun établissement d'une session avec ledit équipement utilisateur n'est détecté avant l'expiration d'un délai (d) après ladite détection de la réception de ladite requête, déclencher la transmission (B) vers l'équipement utilisateur d'au moins un message de signalisation (Sig_Msg(d_{UE})) contenant lesdites données (d_{UE}).

12. Système comprenant une première entité réseau (20) selon la revendication 11 et une deuxième entité réseau (10) apte à être utilisée dans un réseau de communication (100), ladite deuxième entité réseau étant configurée pour :
détecter (D) la réception d'une requête pour obtenir des données (d_{UE}), émise par ledit équipement utilisateur ; et
suite à la détection de la réception de ladite requête, déclencher la surveillance (S) pendant une durée déterminée(d) de l'établissement d'une session avec ledit équipement utilisateur au travers du réseau de communication (100).

13. Equipement utilisateur (1) apte à être utilisé avec un réseau de communication (100), ledit équipement utilisateur étant configuré pour :
transmettre, vers une entité réseau (10) du réseau de communication, une requête pour obtenir des données (d_{UE}) ; et
recevoir en retour, d'une entité réseau (30) du réseau de communication, au moins un message de signalisation (Sig_Msg(d_{UE})) contenant lesdites données (d_{UE}), transmis suite à l'expiration d'un délai (d) après la réception de ladite requête sans qu'une session au travers du réseau ne soit établie avec ledit équipement utilisateur.

14. Equipement utilisateur (1) selon la revendication 13, comprenant en outre un module de temporisation (1₇), configuré pour être déclenché par la transmission de la requête pour obtenir des données et bloquant l'émission d'une requête d'établissement de session vers le réseau jusqu'à l'expiration d'une durée déterminée (d') après le déclenchement du module de temporisation.

15. Equipement utilisateur (1) selon la revendication 13 ou 14, configuré en outre pour insérer un identifiant dudit équipement utilisateur dans une requête de connexion destinée à un équipement réseau auprès duquel sont disponibles lesdites données (d_{UE}) et transmettre ladite requête de connexion vers ledit équipement réseau (60), afin de déclencher la récupération desdites données par l'équipement réseau au moyen dudit identifiant et la réception desdites données (d_{UE}) via une connexion avec l'équipement réseau (60).

## Patentansprüche

1. Verfahren zur Übertragung von Daten von einem Kommunikationsnetzwerk an eine Benutzerausrüstung (1), das die folgenden Schritte enthält:
Erkennen (D) des Empfangs eines Antrags zur Beschaffung von Daten (d_{UE}), gesendet von der Benutzerausrüstung;
Überwachen (S), ob nach der Erkennung des Empfangs des Antrags eine Sitzung mit der Benutzerausrüstung über das Kommunikationsnetzwerk aufgebaut wird; und
wenn vor dem Ablauf einer Frist (d) nach der Erkennung des Empfangs des Antrags kein Aufbau einer Sitzung mit der Benutzerausrüstung erkannt wird, Übertragen (B) mindestens einer die Daten (d_{UE}) enthaltenden Signalisierungsnachricht (Sig_Msg(d_{UE})) an die Benutzerausrüstung.

2. Verfahren nach Anspruch 1, das außerdem, wenn der Aufbau einer Sitzung mit der Benutzerausrüstung vor dem Ablauf der Frist (d) erkannt wird, die Übertragung (A) der Daten (d_{UE}) mittels der Sitzung an die Benutzerausrüstung enthält.

3. Verfahren nach einem der Ansprüche 1 oder 2, wobei die Daten von der Benutzerausrüstung nutzbare Daten sind, verfügbar bei einer die Überwachung (S) des Aufbaus einer Sitzung mit der Benutzerausrüstung durchführenden Netzwerkausrüstung (60), die sich von einer den von der Benutzerausrüstung gesendeten Antrag empfangenden (D102) ersten Netzwerkentität (10) unterscheidet, wobei die Erkennung des Empfangs des Antrags außerdem die Übertragung (D103) einer Benachrichtigungsmeldung über den Empfang des Antrags durch die erste Netzwerkentität (10) von der ersten Netzwerkentität an die Netzwerkausrüstung (60) enthält, wobei die Überwachung (S) durch den Empfang der Benachrichtigungsmeldung durch die Netzwerkausrüstung (60) ausgelöst wird.

4. Verfahren nach Anspruch 3, wobei die Sitzung eine zwischen der Netzwerkausrüstung (60) und der Benutzerausrüstung aufgebaute Anwendungssitzung ist (S122).

5. Verfahren nach Anspruch 3, wobei die Sitzung eine Datenaustauschsitzung ist, die mittels einer Sitzungsverwaltungsentität (50) aufgebaut wird, wobei die Überwachung des Aufbaus einer Sitzung die Überwachung des Empfangs einer Benachrichtigungsmeldung über den Aufbau einer Datenaustauschsitzung (S127) durch die Netzwerkausrüstung (60) enthält, deren Senden von der Sitzungsverwaltungsentität nach dem Aufbau einer Datenaustauschsitzung mittels der Sitzungsverwaltungsentität ausgelöst wird.

6. Verfahren nach einem der Ansprüche 1 oder 2, wobei die Daten über eine Netzwerkausrüstung (60) verfügbar sind, die sich von einer die Überwachung (S) des Aufbaus einer Sitzung mit der Benutzerausrüstung durchführenden zweiten Netzwerkentität (20) unterscheidet, wobei die Übertragung (B) der die Daten enthaltenden Signalisierungsnachrichten (Sig_Msg(d_{UE})) an die Benutzerausrüstung enthält:
die Übertragung (B11) eines Antrags von der zweiten Netzwerkentität an die Netzwerkausrüstung (60), der die Netzwerkausrüstung (60) anweist, die Daten an eine dritte Netzwerkentität (30) zu übertragen (B12); und
die Übertragung (B13) mindestens einer die Daten enthaltenden Signalisierungsnachricht von der dritten Netzwerkentität an die Benutzerausrüstung.

7. Verfahren nach Anspruch 6, wobei die zweite Netzwerkentität (20) den Antrag empfängt (D102), wobei der Empfang des Antrags die Überwachung (S) des Aufbaus einer Sitzung mit der Benutzerausrüstung auslöst.

8. Verfahren nach Anspruch 6 oder 7, wobei die Sitzung eine mittels einer Sitzungsverwaltungsentität (50) aufgebaute Sitzung ist, wobei die Überwachung des Aufbaus einer Sitzung die Überwachung des Empfangs einer Benachrichtigungsmeldung (S128) durch die zweite Netzwerkentität (20) enthält, deren Senden nach dem Aufbau einer mittels der Sitzungsverwaltungsentität aufgebauten Sitzung von der Sitzungsverwaltungsentität ausgelöst wird (S126).

9. Verfahren nach Anspruch 6 oder 7, wobei die Sitzung eine mittels einer Sitzungsverwaltungsentität (50) aufgebaute Datenaustauschsitzung ist, wobei die Überwachung des Aufbaus einer Sitzung die Überwachung, durch die zweite Netzwerkentität, der Übertragung einer Bestätigungsnachricht des Aufbaus einer Datenaustauschsitzung mit der Benutzerausrüstung (S126) zwischen der Sitzungsverwaltungsentität und der Benutzerausrüstung enthält.

10. Verfahren nach Anspruch 6 oder 7, wobei die Sitzung eine zwischen der Netzwerkausrüstung (60) und der Benutzerausrüstung aufgebaute Anwendungssitzung ist, wobei die Netzwerkausrüstung (60) nach dem Aufbau der Anwendungssitzung (S122) eine Benachrichtigungsmeldung über den Aufbau einer Datenaustauschsitzung (S123) an die zweite Netzwerkentität (20) überträgt.

11. Netzwerkentität (20), die geeignet ist, in einem Kommunikationsnetzwerk (100) verwendet zu werden, wobei die Netzwerkentität konfiguriert ist:
zu überwachen (S), ob nach der Erkennung des Empfangs eines von der Benutzerausrüstung gesendeten Antrags zur Beschaffung von Daten (d_{UE}) eine Sitzung mit einer Benutzerausrüstung über das Kommunikationsnetzwerk aufgebaut wird; und
wenn vor dem Ablauf einer Frist (d) nach der Erkennung des Empfangs des Antrags kein Aufbau einer Sitzung mit der Benutzerausrüstung erkannt wird, die Übertragung (B) mindestens einer die Daten (d_{UE}) enthaltenden Signalisierungsnachricht (Sig_Msg(d_{UE})) an die Benutzerausrüstung auszulösen.

12. System, das eine erste Netzwerkentität (20) nach Anspruch 11 und eine zweite Netzwerkentität (10) enthält, die geeignet ist, in einem Kommunikationsnetzwerk (100) verwendet zu werden, wobei die zweite Netzwerkentität konfiguriert ist:
den Empfang eines von der Benutzerausrüstung gesendeten Antrags zur Beschaffung von Daten (d_{UE}) zu erkennen (D); und
nach der Erkennung des Empfangs des Antrags die Überwachung (S) des Aufbaus einer Sitzung mit der Benutzerausrüstung über das Kommunikationsnetzwerk (100) während einer vorbestimmten Dauer (d) auszulösen.

13. Benutzerausrüstung (1), die geeignet ist, mit einem Kommunikationsnetzwerk (100) verwendet zu werden, wobei die Benutzerausrüstung konfiguriert ist:
einen Antrag zur Beschaffung von Daten (d_{UE}) an eine Netzwerkentität (10) des Kommunikationsnetzwerks zu übertragen; und
als Gegenleistung mindestens eine die Daten (d_{UE}) enthaltende Signalisierungsnachricht (Sig_Msg(d_{UE})) von einer Netzwerkentität (30) des Kommunikationsnetzwerks zu empfangen, die nach dem Ablauf einer Frist (d) nach dem Empfang des Antrags übertragen wird, ohne dass eine Sitzung mit der Benutzerausrüstung über das Netzwerk aufgebaut wird.

14. Benutzerausrüstung (1) nach Anspruch 13, die außerdem ein Verzögerungsmodul (17) enthält, das konfiguriert ist, durch die Übertragung des Antrags zur Beschaffung von Daten ausgelöst zu werden, und das Senden eines Sitzungsaufbauantrags an das Netzwerk bis zum Ablauf einer vorbestimmten Dauer (d') nach dem Auslösen des Verzögerungsmoduls blockiert.

15. Benutzerausrüstung (1) nach Anspruch 13 oder 14, die außerdem konfiguriert ist, eine Kennung der Benutzerausrüstung in einen für eine Netzwerkausrüstung bestimmten Verbindungsantrag einzufügen, bei der die Daten (d_{UE}) verfügbar sind, und den Verbindungsantrag an die Netzwerkausrüstung (60) zu übertragen, um die Wiedergewinnung der Daten durch die Netzwerkausrüstung mittels der Kennung und den Empfang der Daten (d_{UE}) mittels einer Verbindung mit der Netzwerkausrüstung (60) auszulösen.

## Claims

1. Method for transmitting data from a communication network to a user equipment (1), comprising the following steps:
- detecting (D) the reception of a request to obtain data (d_{UE}) transmitted by said user equipment;
- monitoring (S) whether a session is established with said user equipment over the communication network after detecting the reception of said request; and
- transmitting (B), if the establishment of a session with said user equipment is not detected before a delay (d) has expired after detecting the reception of said request, at least one signalling message (Sig_Msg (d_{UE})) containing said data (d_{UE}) to the user equipment.

2. Method according to Claim 1, further comprising, when the establishment of a session with the user equipment is detected before said delay (d) has expired, transmitting (A) said data (d_{UE}) to the user equipment by means of said session.

3. Method according to either of Claims 1 and 2, wherein said data is data that can be used by the user equipment, which data is available from a network equipment (60) implementing said monitoring (S) of the establishment of a session with the user equipment, which network equipment is distinct from a first network entity (10) receiving said request transmitted by the user equipment (D102), with the detection of the reception of said request further comprising transmitting (D103), from the first network entity to the network equipment (60), a notification message indicating that the first network entity (10) has received said request, with said monitoring (S) being triggered by the reception of the notification message by the network equipment (60).

4. Method according to Claim 3, wherein said session is an application session established between the network equipment (60) and the user equipment (S122).

5. Method according to Claim 3, wherein said session is a data exchange session established by means of a session management entity (50), with said monitoring of the establishment of a session involving the network equipment (60) monitoring the reception of a notification message indicating the establishment of a data exchange session (S127) whose transmission is triggered by said session management entity after a data exchange session has been established by means of the session management entity.

6. Method according to either of Claims 1 and 2, wherein said data is available via a network equipment (60) distinct from a second network entity (20) implementing said monitoring (S) of the establishment of a session with the user equipment, with said transmission (B) of the signalling messages (Sig_Msg(d_{UE})) to the user equipment containing said data comprising:
- transmitting, from the second network entity to the network equipment (60), a request (B11) instructing the network equipment (60) to transmit (B12) said data to a third network entity (30); and
- transmitting (B13), from said third network entity to the user equipment, at least one signalling message containing said data.

7. Method according to Claim 6, wherein the second network entity (20) receives said request (D102), with the reception of said request triggering the monitoring (S) of the establishment of a session with the user equipment.

8. Method according to Claim 6 or 7, wherein said session is a session established by means of a session management entity (50), with said monitoring of the establishment of a session involving the second network entity (20) monitoring the reception of a notification message (S128), the transmission of which is triggered by said session management entity following the establishment of a session established by means of the session management entity (S126).

9. Method according to Claim 6 or 7, wherein said session is a data exchange session established by means of a session management entity (50), with said monitoring of the establishment of a session involving the second network entity monitoring the transmission of a confirmation message between the session management entity and the user equipment confirming the establishment of a data exchange session with the user equipment (S126).

10. Method according to Claim 6 or 7, wherein said session is an application session established between the network equipment (60) and the user equipment, with the network equipment (60) transmitting a notification message to the second network entity (20) indicating the establishment of a data exchange session (S123) following the establishment of said application session (S122).

11. Network entity (20) able to be used in a communication network (100), wherein said network entity is configured to:
- monitor (S) whether a session is established with a user equipment over the communication network after detecting the reception of a request to obtain data (d_{UE}) transmitted by said user equipment; and
- trigger, if the establishment of a session with said user equipment is not detected before a delay (d) has expired after detecting the reception of said request, the transmission (B) of at least one signalling message (Sig_Msg(d_{UE}) ) containing said data (d_{UE}) to the user equipment.

12. System comprising a first network entity (20) according to Claim 11 and a second network entity (10) able to be used in a communication network (100) , wherein said second network entity is configured to:
- detect (D) the reception of a request to obtain data (d_{uE}) transmitted by said user equipment;
- trigger monitoring (S), after detecting the reception of said request, of the establishment of a session with said user equipment over the communication network (100) for a determined duration (d).

13. User equipment (1) able to be used with a communication network (100), wherein said user equipment is configured to:
- transmit a request to a network entity (10) of the communication network to obtain data (d_{UE}); and
- in response, receive, from a network entity (30) of the communication network, at least one signalling message (Sig_Msg(d_{UE})) containing said data (d_{UE}), transmitted after a delay (d) has expired after the reception of said request without a session being established with said user equipment over the network.

14. User equipment (1) according to Claim 13, further comprising a timing module (1₇) configured to be triggered by transmitting the request to obtain data and blocking the transmission of a request to establish a session to the network until a determined duration (d') has expired after triggering the timing module.

15. User equipment (1) according to Claim 13 or 14, further configured to include an identifier of said user equipment in a connection request intended for a network equipment with which said data (d_{UE}) is available and to transmit said connection request to said network equipment (60) in order to trigger the retrieval of said data by the network equipment by means of said identifier and the reception of said data (d_{UE}) via a connection with the network equipment (60).
